# EUROPÄISCHE PATENTSCHRIFT

(11) **EP 0 239 827 B1**
(45) Veröffentlichungstag und Bekanntmachung des Hinweises auf die Patenterteilung: **26.05.1993**
(21) Anmeldenummer: 87103115.9
(22) Anmeldetag: 05.03.1987
(51) Int. Cl.: G06F 13/18, G06F 15/16

(54) **Verfahren zum Ansteuern eines gemeinsamen Speichers eines aus einzelnen Mikroprozessorsystemen bestehenden Mehrprozessorsystems**
Method for the control of a common memory of a multiprocessor system comprising separate microprocessor systems
Méthode de commande d'une mémoire commune d'un système multiprocesseur comprenant des systèmes microprocesseurs séparés

(30) Priorität: 02.04.1986 DE 3610995
(43) Veröffentlichungstag der Anmeldung: 07.10.1987
(73) Patentinhaber: SIEMENS AKTIENGESELLSCHAFT, 80333 München (DE)
(72) Erfinder: Pfeiffer, Klaus, Dr.-Phys., D-8031 Gilching (DE); Kosler, Wolfgang, Dipl.-Ing., D-8000 München 70 (DE); Paulmichl, Erich, Dipl.-Ing., D-8035 Gauting (DE)

(56) Entgegenhaltungen:
- US-A- 4 400 771
- IEEE MICRO, Band 5, Nr. 2, April 1985, Seiten 53-66, IEEE, New York, US; A. FARO et al.: "A Multimicrocomputer-based Structure for Computer Networking"
- REVIEW OF SCIENTIFIC INSTRUMENTS, Band 57, Nr. 1, Januar 1986, Seiten 122-123, American Institute of Physics, Woodbury, NY, US; F.F. SCAYSBROOK: "Dual-ported memory"
- IBM TECHNICAL DISCLOSURE BULLETIN, Band 28, Nr. 8, Januar 1986, Seiten 3269-3271, New York, US: "Multi-write/single-read memory access scheme for common data base multiprocessor system"

## Beschreibung

Die Erfindung bezieht sich auf ein Verfahren zum Ansteuern eines gemeinsamen Speichers eines aus einzelnen Mikroprozessorsystemen bestehenden Mehrprozessorsystems, bei dem die einzelnen Mikroprozessoren jeweils mittels einer Zuteileinrichtung über einen mikroprozessorsysteminternen bzw. lokalen Bus, entsprechende Anpassungseinrichtungen und über einen mit allen Mikroprozessorsystemen verbundenen Mehrprozessorbus, auf den ein Mikroprozessorsystem jeweils nur für die Dauer eines systemeigenen Buszugriffszyklus zugreifen kann, auf eine im gemeinsamen Speicher befindliche Datenbasis, unter Berücksichtigung zugeteilter Prioritätskennzahlen, zugreifen.

Aus dem Benutzerhandbuch des Mikroprozessors SAB 8086 (SAB 8086 Family, Users Manual, October 1979, MCS-86), Anhang AP 51 (A 113-A 131) ist ein Mehrprozessorsystem bekannt, bei dem drei gleichartig aufgebaute Mikroprozessorsysteme sowie ein gemeinsamer Speicher und eine Anpassungseinrichtung für den Anschluß externer Einrichtungen über einen Mehrprozessorbus - gebildet aus Steuer-, Adreß- und Datenleitungen - und über Leitungen für die Anforderung und Zuteilung des Mehrprozessorbusses untereinander verbunden sind. In jedem der Mikroprozessorsysteme verbindet ein lokaler Bus die einzelnen Systemkomponenten, wie Mikroprozessor, Anpassungeinrichtung an den Datenbus, Anpassungseinrichtung an den Adreßbus und weitere, jedoch nicht dargestellte Einrichtungen, wie z. B. lokaler Speicher, untereinander. Eine mit dem Mikroprozessor verbundene und von diesem gesteuerte Bussteuereinrichtung stellt das Bindeglied zum Steuerbus dar. Eine ebenfalls mit dem Mikroprozessor verbundene und von diesem gesteuerte Mehrprozessor-Buszuteileinrichtung ist mit allen Buszuteileinrichtungen des Mehrprozessorsystems sowie mit einer Prioritätseinrichtung verbunden. Mittels der Mehrprozessor-Buszuteileinrichtungen und der Prioritätseinrichtung wird der Mehrprozessorbus in einer vorgegebenen Reihenfolge entsprechend der jedem Mikroprozessorsystem zugeordneten Prioritätskennzahl jeweils für die Dauer eines Mehrprozessorbus-Zugriffszyklus dem entsprechenden Mikroprozessor Zugeteilt. Eine jedem Mikroprozessorsystem zugeordnete Takteinrichtung versorgt die Systemkomponenten mit den erforderlichen Taktinformationen.

Sind solche Mehrprozessorsysteme für die Zentralen Steuerungen von Fernmeldevermittlungssystemen vorgesehen, müssen nicht nur die Zugriffe auf den Mehrprozessorbus koordiniert, sondern auch die Zugriffe der Mikroprozessorsysteme auf eine für alle gemeinsame und in einem entsprechenden Bereich des gemeinsamen Speichers gespeicherte Datenbasis gesteuert werden. Des weiteren soll der Zugriffsmodus, der für Zugriffe auf den Mehrprozessorbus, die nicht der Aktualisierung bzw. zum Lesen der Datenbasis dienen, nicht beeinflußt werden. Da in der Datenbasis unterschiedlich große und zusammengehörige Informationsmengen gespeichert sind, sind zum Aktualisieren oder Auslesen dieser Informationen ggf. mehrere Mehrprozessorbuszugriffe erforderlich. Außerdem muß sichergestellt sein, daß nicht während des Aktualisierungsvorganges ein Lesevorgang durchgeführt wird und umgekehrt.

Aus der Druckschrift IBM Technical Disclosure Bulletin, Band 28, Nr. 8, Januar 1986, Seiten 3269 bis 3271, ist ein Mehrprozessorsystem bekannt, bei dem in einem Speicher für jeden Prozessor eine Kopie der ansonsten gleichen Datenbasis gespeichert ist, wobei jeder Prozessor die Datenbasisinformationen aus der diesem zugeordneten Datenbasis liest. Die Aktualisierung bzw. das Up-Daten der Datenbasiskopien kann mit Hilfe einer Zuteillogik durch jeden Prozessor bewirkt werden. Aufgrund der mehrfachen Speicherung der Datenbasiskopien ist ein erheblicher Speicherplatz bzw. Speicheraufwand erforderlich.

Aus einer weiteren Druckschrift, IEEE MICRO, Band 5, Nr. 2, April 1985, Seiten 53 bis 66, IEEE New York, ist ein Multiprozessorsystem bekannt, bei dem einzelne Mikroprozessoren über einen gemeinsamen Bus auf einen Speicher zugreifen. Der Zugriff wird durch eine bekannte, mit einer Prioritätslogik ausgestatteten Buszuteileinrichtung gesteuert.

Der Erfindung liegt die Aufgabe zugrunde, ein Verfahren mit der dazugehörigen Schaltungsanordnung zum Ansteuern eines die Datenbasis speichernden Basisbereiches eines gemeinsamen Speichers, insbesondere Speicher einer zentralen Steuerung von Fernmeldevermittlungssysteman, anzugeben, das auf bekannte Verfahren der Mehrprozessor-Buszuteilung aufbaut und zusätzlich die Zugriffe zum Aktualisieren und Lesen zum Basisbereich eines gemeinsamen Speichers eines Mehrprozessorsystems kollisionsfrei und Dauerblockierungen vermeidend koordiniert. Die Aufgabe wird ausgehend von der eingangs beschriebenen Anordnung durch die Merkmale der Ansprüche 1 und 5 gelöst.

Der Vorteil des erfindungsgemäßen Verfahrens besteht insbesondere darin, daß ausgehend von einem Verfahren, bei dem jedem Prozessorsystem der Mehrprozessorbus zyklisch in einer durch die Prioritätskennzahl vorgegebenen Reihenfolge zugeteilt wird, ein weiteres Verfahren überlagert ist, das den Zugriff der jeweiligen Mikroprozessorsysteme zum Basisbereich im gemeinsamen Speicher steuert. Beim erfindungsgemäßen Verfahren kann nur eines der Mikroprozessorsysteme, und zwar das als Hauptprozessorsystem gekennzeichnete Mikroprozessorsystem die Datenbasis im gemeinsamen Speicher aktualisieren, jedoch können die Datenbasisinformationen von allen Mikroprozessorsystemen einschließlich des Hauptprozessorsystems gelesen werden. Jeweils für die Dauer des Aktualisierens bzw. Lesens der Datenbasisinformationen wird die zyklisch in einer durch die Prioritätskennzahlen vorgegebenen Reihenfolge ablaufende Mehrprozessorbuszuteilung solange unterbrochen, bis der die Datenbasisinformationen speichernde Bereich des gemeinsamen Speichers aktualisiert oder gelesen wurde. Anschließend wird der Mehrprozessorbus wieder zyklisch, prioritätskennzahlenentsprechend den einzelnen Mikroprozessorsystemen zugeteilt, sofern dieser Zuteilungsmodus nicht erneut durch einen weiteren Zugriff eines Mikroprozessorsystems auf
die im gemeinsamen Speicher gespeicherte Datenbasis unterbrochen wird. Bei plötzlich auftretenden Störungen eines gerade auf die Datenbasis zugreifenden Mikroprozessorsystems könnte der Mehrprozessorbus für längere Zeit oder dauernd blockiert werden. Um dies zu vermeiden, wird die Dauer der Zugriffe auf die Datenbasisinformationen überwacht und bei Überschreiten der maximal zulässigen Zugriffsdauer der Mehrprozessorbus zwangsweise für ein anderes Mikroprozessorsystem freigegeben.

Nach einer vorteilhaften Weiterbildung der Erfindung gemäß Patentanspruch 2 können Zugriffe gestörter oder in Wartung befindlicher Mikroprozessorsysteme auf den Mehrprozessorbus oder den gemeinsamen Speicher verhindert werden. Hierbei verhindert die Zuteileinrichtung im Hauptprozessorsystem bei Vorliegen einer den Störungszustand eines Mikroprozessorsystems anzeigenden Information - trotz eventueller Anforderungen des gestörten Mikroprozessorsystems - ein Zugreifen des gestörten Mikroprozessorsystems sowohl auf den gemeinsamen Mehrprozessorbus als auch auf den gemeinsamen Speicher. Sowohl die den störungsfreien Zustand als auch die den Störungszustand anzeigenden Informationen werden über spezielle Leitungen, an die alle Mehrprozessorsysteme angeschlossen sind, zum Hauptprozessorsystem übermittelt. Ein vorher gestörtes und anschließend als störungsfrei gekennzeichnetes Mikroprozessorsystem wird in der Zuteileinrichtung entsprechend seiner Priorität wieder in das Zuteilverfahren miteinbezogen.

Der Vorteil der Schaltungsanordnung zum Durchführen des erfindungsgemäßen Verfahrens gemäß Anspruch 5 besteht darin, daß diese Schaltungsanordnung in jedem der Mikroprozessorsysteme implementiert ist und durch einfaches Einstellen von Schaltern bzw. Brücken jedes der Mikroprozessorsysteme als Hauptprozessor oder als Nebenprozessor einsetzbar ist. Damit ist für unterschiedlich große zentrale Steuerungen von Fernmeldevermittlungsanlagen nur ein einziger Mikroprozessorsystemtyp zu fertigen und für den Ersatz von ausgefallenen Mikroprozessorsystemen nur ein einziger Mikroprozessorsystemtyp vorrätig zu halten.

Im folgenden wird das Verfahren anhand einer Zeichnung und ein Ausführungsbeispiel anhand einer Zeichnung näher erläutert. Dabei zeigt
- Fig. 1: das erfindungsgemäße Verfahren anhand von Ablaufdiagrammen und
- Fig. 2: den Aufbau der Anordnung zum Durchführen des erfindungsgemäßen Verfahrens.

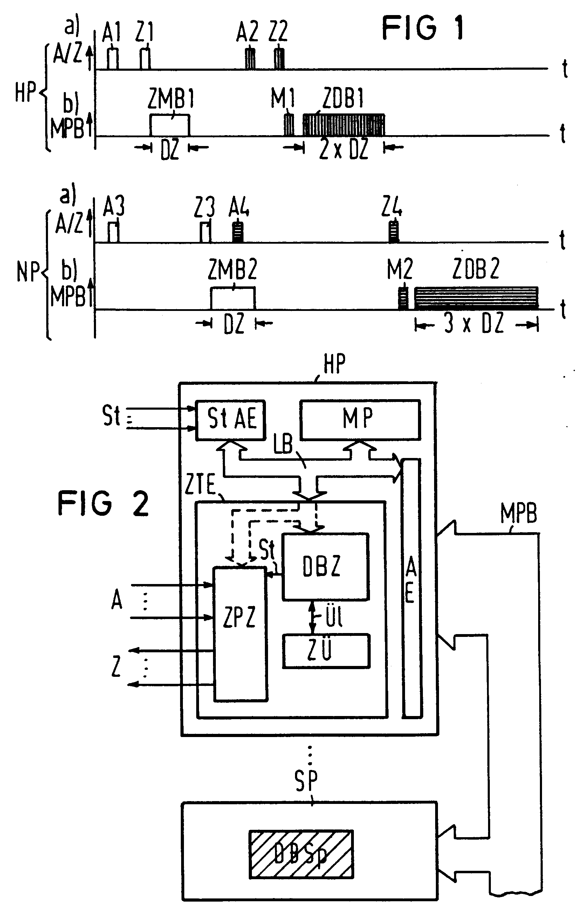

Fig. 1 zeigt die Verfahrensabläufe anhand von Zeitablaufdiagrammen sowohl für Zugriffe der Mikroprozessorsysteme auf den gemeinsamen Mehrprozessorbus MPB als auch für Zugriffe auf den Basisbereich des gemeinsamen Speichers über den Mehrprozessorbus MPB. Beispielhaft sind die Verfahrensabläufe für ein Hauptprozessorsystem HP und ein Nebenprozessorsystem NP dargestellt. Jedem der beiden Mikroprozessorsysteme HP, NP sind zwei Ablaufdiagramme zugeordnet. Das erste Ablaufdiagramm a) zeigt jeweils in zeitlicher Reihenfolge t die Verfahrensschritte, die dem Zugriff eines Mehrprozessorsystems auf den gemeinsamen Mehrprozessorbus MPB vorangehen. Das zweite Ablaufdiagramm b) zeigt jeweils in zeitlicher Reihenfolge t Meldungen, die vor dem aktuellen Zugriff eines Mehrprozessorsystems auf den gemeinsamen Mehrprozessorbus MPB bzw. Basisbereich des gemeinsamen Speichers über den gemeinsamen Mehrprozessorbus MPB übermittelt werden und die eigentlichen Zugriffe auf den Mehrprozessorbus MPB bzw. den Basisbereich des gemeinsamen Speichers. Verfahrensschritte, die den Zugriff eines Mehrprozessorsystems HP, NP auf den Basisbereich eines gemeinsamen Speichers steuern, sind durch eine waagerechte oder senkrechte Schraffur gekennzeichnet.

Zu Ablaufdiagrammbeginn sei vorausgesetzt, daß das Nebenprozessorsystem NP gerade einen Zugriff auf den Mehrprozessorbus MPB beendete. In der Mehrprozessor-Buszuteileinrichtung treffen gleichzeitig Buszugriffsanforderungen A1, A3 ein, d. h. Hauptprozessorsystem HP und Nebenprozessorsystem NP wollen auf den gemeinsamen Mehrprozessorbus MPB zugreifen. Aufgrund der zyklischen, prioritätskennzahlenentsprechenden Zuteilung erhält als nächstes Mikroprozessorsystem das Hauptprozessorsystem HP Zugriff zum Mehrprozessorbus MPB. Dies wird dem Hauptprozessorsystem HP mittels einer Zuteilinformation Z1 mitgeteilt, worauf das Hauptprozessorsystem HP sofort für die Dauer eines Zugriffszyklus DZ auf den Mehrprozessorbus MPB zugreift. Dieser Mehrprozessorzugriff ZMB1 des Hauptprozessorsystems HP dient dem Informationsaustausch der Mikroprozessorsysteme untereinander oder dem Zugriff auf den nicht durch die Datenbasis belegten Bereich des gemeinsamen Speichers. Anschließend wird dem Nebenprozessorsystem NP, dessen Anforderung A3 auf Zugriff zum Mehrprozessorbus MPB noch nicht entsprochen wurde, der Mehrprozessorbus MPB zugeteilt und eine entsprechende Zuteilinformation Z3 an das Nebenprozessorsystem NP übermittelt. Der Nebenprozessor NP greift sofort für die Dauer eines Zugriffszyklusses DZ auf den Mehrprozessorbus MPB zu. Nach Ende dieses Mehrprozessorbuszugriffs ZMB2 liegen bereits zwei Anforderungen A2, A4 sowohl des Hauptprozessorsystems HP als auch des Nebenprozessorsystems NP vor, die das Zugriffsbestreben beider Mikroprozessorsysteme auf den Basisbereich des gemeinsamen Speichers über den Mehrprozessorbus MPB repräsentieren. Entsprechend der zyklischen, prioritätskennzahlenentsprechenden Zuteilung wird dem Hauptprozessorsystem HP der Zugriff auf den Mehrprozessorbus MPB gewährt und dies dem Hauptprozessorsystem HP mittels der Zuteilinformation Z2 mitgeteilt. Das Hauptprozessorsystem HP greift sofort auf den Mehrprozessorbus MPB zu und sendet an alle übrigen Mikroprozessorsysteme eine Meldung M1, mit der verhindert wird, daß die restlichen Mikroprozessorsysteme auf den Basisbereich des gemeinsamen Speichers zugreifen. Nach dem Absenden dieser Meldung M1 greift das Hauptprozessorsystem HP über den Mehrprozessorbus MPB auf den Basisbereich des gemeinsamen Speichers beispielsweise für die Dauer zweier Buszugriffszyklen DZ zu. Nach dem Ende dieses Mehrprozessorbuszugriffs ZDB1 wird der Mehrprozessorbus MPB entsprechend der zyklischen, prioritätskennzahlenentsprechenden Zuteilung dem Nebenprozessorsystem NP zugeteilt und dies dem Nebenprozessorsystem NP mittels der Zuteilinformation Z4 mitgeteilt. Das Nebenprozessorsystem NP greift sofort auf den Mehrprozessorbus MPB zu und sendet eine Meldung M2 an das Hauptprozessorsystem HP. Mittels dieser Meldung M2 wird verhindert, daß das Hauptprozessorsystem HP auf den Basisbereich des gemeinsamen Speichers zugreift und die Datenbasis aktualisiert; dies wird solange verhindert, bis das Nebenprozessorsystem NP auf den Basisbereich des gemeinsamen Speichers zugreift. Nach dem Absetzen der Meldung M2 steuert das Nebenprozessorsystem NP den Basisbereich des gemeinsamen Speichers an und liest dort die entsprechend adressierten Datenbasisinformationen. Die Dauer des Zugriffs ZDB2 auf den Basisbereich des gemeinsamen Speichers ist hier mit drei Buszugriffszyklen ZD angenommen.

Fig. 2 zeigt diejenigen Systemkomponenten einer Anordnung, die zum Durchführen des erfindungsgemäßen Verfahrens notwendig sind. Die Anordnung der Systemkomponenten wird anhand - repräsentativ ausgewählt aus den gleichartig aufgebauten Mikroprozessorsystemen - des Aufbaus des Hauptprozessorsystems HP näher erläutert. Ein in jedem Mikroprozessorsystem angeordneter lokaler Bus LB, bestehend aus Steuer-, Adreß- und Datenleitungen, verbindet jeweils einen Mikroprozessor MP, eine Anpassungseinrichtung AE, eine Störungsannahme- bzw. Störungsabgabeeinrichtung StAE und eine Zuteileinrichtung ZTE untereinander. In dem beispielsweise mittels des SAB 80286 realisierten Mikroprozessors erfolgt zentral die Steuerung des Hauptprozessorsystems HP. In der vom Mikroprozessor MP gesteuerten Anpassungseinrichtung AE werden Informationen sowohl an einen an diese Anpassungseinrichtung AE angeschlossenen Mehrprozessorbus MPB übermittelt als auch empfangen. Diese Anpassungseinrichtung AE sorgt für die zeitgerechte Übergabe der Informationen sowohl an den Mehrprozessorbus MPB als auch an den lokalen Bus LB.

Die Zuteileinrichtung ZTE besteht aus einer Prioritätszuteileinrichtung ZPZ zur zyklischen, prioritätskennzahlenentsprechenden Zuteilung des Mehrprozessorbusses MPB, einer Datenbasiszuteileinrichtung DBZ zur Zuteilung des Zugriffs auf den Basisbereich DBSp des gemeinsamen Speichers SP und aus einer Überwachungseinrichtung ZÜ, die die Dauer der Zugriffe auf den Basisbereich DBSp des gemeinsamen Speichers Sp überwacht. Von allen Prioritätszuteileinrichtungen ZPZ der Nebenprozessorsysteme NP führen Leitungen A direkt an die Prioritätszuteileinrichtung ZPZ des Hauptprozessorsystems HP. Auf diesen Leitungen A übermitteln die jeweiligen Nebenprozessorsysteme NP ihre Anforderungen auf Zuteilung des Mehrprozessorbusses MPB. Des weiteren führen Leitungen Z von der Prioritätszuteileinrichtung ZPZ des Hauptprozessorsystems HP zu allen Einrichtungen ZPZ der im Mehrprozessorsystem angeordneten Nebenprozessorsysteme NP. Auf diesen Leitungen Z wird jedem Nebenprozessorsystem NP die Zuteilinformation übermittelt. Nach dem Empfang dieser Information greift das jeweilige Nebenprozessorsystem NP sofort auf den gemeinsamen Mehrprozessorbus MPB zu. Über den bis zur Prioritätszuteileinrichtung ZPZ geführten, und gestrichelt gekennzeichneten lokalen Bus LB teilt der Mikroprozessor MP dieser Prioritätszuteileinrichtung ZPZ mit, welches der Mikroprozessorsysteme des Mehrprozessorsystems sich im Störungszustand bzw. störungsfreien Zustand befindet. In der Prioritätszuteileinrichtung ZPZ werden gestörte Mikroprozessorsysteme solange aus der zyklischen, prioritätskennzahlenentsprechenden Mehrprozessor-Buszuteilung ausgeschlossen, bis eine den störungsfreien Zustand anzeigende Information vom Mikroprozessor MP an die Prioritätszuteileinrichtung ZPZ übermittelt wird.

In der Datenbasiszuteileinrichtung DBZ werden die Zugriffe auf den Basisbereich DBSp des gemeinsamen Speichers Sp koordiniert. Die Mikroprozessoren MP der jeweiligen Mikroprozessorsysteme teilen über den lokalen Bus LB der jeweiligen Datenbasiszuteileinrichtung DBZ mit, daß der nächste Zugriff auf den Mehrprozessorbus MPB dem Zugriff auf den Basisbereich DBSp des gemeinsamen Speichers Sp dient, um die dort gespeicherte Datenbasis zu aktualisieren - nur durch das Hauptprozessorsystem HP - oder die Datenbasisinformationen - alle Mikroprozessorsysteme - zu lesen. Vor dem Zugriff auf den Basisbereich DBSp des gemeinsamen Speichers Sp wird in der Datenbasiszuteileinrichtung DBZ eine Meldung erzeugt und an das Hauptprozessorsystem HP bzw. an alle Nebenprozessorsysteme NP über den lokalen Bus LB und den Mehrprozessorbus MPB übermittelt. Diese Meldung verhindert, daß die Datenbasis durch das Hauptprozessorsystem HP noch aktualisiert wird, während eines der Mikroprozessorsysteme diese Datenbasisinformationen ausliest. Da sich der Zugriff auf den Basisbereich DBSp des gemeinsamen Speichers Sp über mehrere Mehrprozessorbus-Zugriffszyklen erstrecken kann, muß die zyklische, prioritätskennzahlenentsprechende Zuteilung - teilt den Mehrprozessorbus MPB jeweils nur einen Buszugriffszyklus lang zu - gesteuert werden. Über eine Steuerleitung ST wird eine in der Datenbasiszuteileinrichtung DBZ erzeugte Steuerinformation solange der Prioritätszuteileinrichtung ZPZ übermittelt, bis der Zugriff auf den Basisbereich DBSp des gemeinsamen Speichers Sp des jeweiligen Mikroprozessorsystems beendet ist. In der Prioritätszuteileinrichtung ZPZ wird entsprechend den Steuerinformationen die zyklische, prioritätskennzahlenentsprechende Mehrprozessor-Buszuteilung angehalten oder ausgeführt.

Eine in der Zuteileinrichtung ZTE angeordnete Überwachungseinrichtung ZÜ überwacht die Dauer des Zugriffs auf den Basisbereich DBSp des gemeinsamen Speichers Sp. Hierfür wird der Überwachungseinrichtung ZÜ über eine Leitung ÜL der Beginn des Zugriffs auf den Basisbereich DBSP des gemeinsamen Speichers SP mitgeteilt. Wird aufgrund eines gestörten Mikroprozessorsystems die maximal zulässige Zugriffsdauer überschritten, so wird in der Überwachungseinrichtung ZÜ eine entsprechende Information erzeugt und an die Einrichtung DBZ übermittelt. Aufgrund dieser Information wird in der Datenbasiszuteileinrichtung DBZ der aktuelle Zugriff auf den Basisbereich DBSp des gemeinsamen Speichers Sp sofort zwangsweise beendet und der Mehrprozessorbus MPB bzw. der Basisbereich DBSp des gemeinsamen Speichers Sp entsprechend der zyklischen, prioritätskennzahlenentsprechenden Zuteilung einem anderen Mikroprozessorsystem zugeteilt. Die Störungsannahmeeinrichtung StAE des Hauptprozessorsystems HP ist über jeweils eine Leitung ST mit den restlichen Störungsabgabeeinrichtungen StAE aller Nebenprozessorsysteme NP verbunden. Über diese Leitungen ST wird dem Hauptprozessorsystem HP der störungsfreie Zustand bzw. der Störungszustand aller Nebenprozessorsysteme NP mittels entsprechender Informationen mitgeteilt. In der Störungsannahmeeinrichtung StAE werden diese Informationen aufgesammelt und bei Zustandsänderungen dem Mikroprozessor MP des Hauptprozessorsystems HP mittels einer entsprechenden Information über den lokalen Bus LB übermittelt. Daraufhin wird - wie bereits beschrieben - das jeweilige Mikroprozessorsystem von der zyklischen, prioritätskennzahlengesteuerten Zuteilung ausgeschlossen oder wieder aufgenommen.

Alle Mikroprozessorsysteme und der gemeinsame Speicher SP sind über einen aus Steuer-, Adreß- und Datenleitungen aufgebildeten Mehrprozessorbus MPB untereinander verbunden.

Die einzelnen Systemkomponenten können beispielsweise mit folgenden integrierten Schaltungen realisiert werden:
- Anpassungseinrichtung AE:: SAB 8287 (Anpassung an Datenbus); SAB 82283 (Anpassung an Adreßbus); 82288 (Bussteuereinrichtung).
- Zuteileinrichtung ZTE:: SAB 8289 (Buszuteileinrichtung) und aus TTL-NOR-Gattern und TTL-D-Flip-Flops, die in einem kundenspezifischen integrierten Baustein zusammengefaßt sind.
- Störungsannahme- bzw. -abgabeeinrichtung StAE:: SAB 8254 (Zeitüberwachung) und TTL-Kippstufen.

### Bezugszeichenliste

- A, A1...A4: Buszugriffsanforderungen
- AE: Anpassungseinrichtung
- DBSp: Basisbereich
- DBZ: Datenbasiszuteileinrichtung
- DZ: Buszugriffszyklen
- HP: Hauptprozessorsystem
- LB: lokaler Bus
- M1, M2: Meldungen
- MP: Mikroprozessor
- MPB: Mehrprozessorbus
- NP: Nebenprozessorsystem
- S: p Speicher
- St: Steuerleitung
- StAE: Störungsannahmeeinrichtung
- t: zeitliche Reihenfolge
- Z, Z1...Z4: Zuteilinformationen
- ZDB1, ZDB2: Mehrprozessorbuszugriff
- ZMB1, ZMB2: Mehrprozessorbuszugriff auf Basisbereich des Speichers
- ZPZ: Prioritätszuteileinrichtung
- ZTE: Zuteileinrichtung
- ZÜ: Überwachungseinrichtung

## Patentansprüche

1. Verfahren zum Ansteuern eines gemeinsamen Speichers eines aus einzelnen Mikroprozessorsystemen bestehenden Mehrprozessorsystems, bei dem die einzelnen Mikroprozessoren jeweils mittels einer Zuteileinrichtung über einen mikroprozessorsysteminternen bzw. lokalen Bus, eine entsprechende Anpassungseinrichtung und über einen mit allen Mikroprozessorsystemen verbundenen Mehrprozessorbus, auf den ein Mikroprozessorsystem jeweils nur für die Dauer eines systemeigenen Buszugriffszyklus zugreifen kann, auf eine im gemeinsamen Speicher befindliche Datenbasis unter Berücksichtigung zugeteilter Prioritätskennzahlen zugreifen, **dadurch gekennzeichnet**, daß eines der Mikroprozessorsysteme derart als Hauptprozessorsystem (HP) und die verbleibenden Mikroprozessorsysteme derart als Nebenprozessorsysteme (NP) gesteuert werden, daß die im gemeinsamen Speicher (Sp) gespeicherte Datenbasis nur durch das Hauptprozessorsystem (HP) aktualisierbar, die Datenbasisinformationen dagegen von allen Mikroprozessorsystemen lesbar ist, daß die Zuteileinrichtung (ZTE) im Hauptprozessorsystem (HP) vorgesehen ist und daß an die Zuteileinrichtung (ZTE) alle Mikroprozessorsysteme ihre Buszugriffsanforderungen mittels entsprechender Informationen jeweils über hierfür vorgesehene Anforderungsleitungen (A) übermitteln, daß in der Zuteileinrichtung (ZTE) der Mehrprozessorbus (MPB) zyklisch in einer durch die Prioritätskennzahlen vorgegebenen Reihenfolge jedem Mikroprozessorsystem zugeteilt wird und eine die Zuteilung repräsentierende Information an jedes Mehrprozessorsystem über jeweils hierfür vorgesehene Zuteilleitungen (Z) übertragen wird, daß vor dem Zugriff des Hauptprozessorsystems (HP) auf den Basisbereich (DBSp) im Sinne der Aktualisierung der Datenbasis das Hauptprozessorsystem (HP) über den Mehrprozessorbus (MPB) jedem Nebenprozessorsystem (NP) eine Meldung (M1) übermittelt, wodurch der Zugriff aller Nebenprozessorsysteme (NP) auf den Mehrprozessorbus (MPB) bzw. den Basisbereich (DBSp) solange verhindert wird, bis die Aktualisierung der Datenbasis durch das Hauptprozessorsystem (HP) erfolgt oder der aktuelle Zugriff mittels einer hierfür vorgesehenen Überwachungseinrichtung (ZÜ) beendet und einem weiteren Nebenprozessorsystem (NP) prioritätskennzahlenentsprechend der Mehrprozessorbuszugriff zugeteilt ist, daß vor dem Zugriff eines Nebenprozessorsystems (NP) auf den Basisbereich (DBSp) im Sinne des Lesens der Datenbasisinformationen das jeweilige Nebenprozessorsystem (NP) dem Hauptprozessorsystem (HP) über den Mehrprozessorbus (MPB) eine Meldung (M2) übermittelt, wodurch der Zugriff des Hauptprozessorsystems (HP) auf den Mehrprozessorbus (MPB) bzw. den Basisbereich (DBSp) im Sinne des Aktualisierens der Datenbasis solange verhindert wird, bis alle prioritätskennzahlenentsprechend vor dem zugreifenden Nebenprozessorsystem (NP) liegenden Nebenprozessorsysteme (NP) jeweils ihren Zugriff auf den Basisbereich (DBSp) oder die Überwachungseinrichtung (ZÜ) einen aktuellen Zugriff beenden und dem Hauptprozessorsystem (HP) den Zugriff zum Basisbereich (DBSp) gewährt.

2. Verfahren nach Anspruch 1, **dadurch gekennzeichnet**, daß nach dem Übermitteln von Störungsmeldungen eines oder mehrerer Nebenprozessorsysteme (NP) an das Hauptprozessorsystem (HP) in der Zuteileinrichtung (ZTE) den gestörten Nebenprozessorsystemen (NP) der Mehrprozessorbus (MPB) solange nicht mehr zugeteilt wird, bis die gestörten Nebenprozessorsysteme (NP) eine den störungsfreien Zustand anzeigende Meldung dem Hauptprozessorsystem (HP) übermitteln.

3. Verfahren nach Anspruch 1,
**dadurch gekennzeichnet,**
daß alle Mikroprozessorsysteme gleich aufgebaut sind und die Mikroprozessorsysteme als Haupt- oder Nebenprozessorsysteme (HP, NP) einstellbar sind.

4. Verfahren nach Anspruch 1,
**dadurch gekennzeichnet,**
daß die in lokalen Speichern der Mikroprozessorsysteme gespeicherten Prioritätskennzahlen beliebig auf die Mikroprozessorsysteme verteilbar sind.

5. Schaltungsanordnung zum Ansteuern eines gemeinsamen Speichers eines aus einzelnen Mikroprozessorsystemen bestehenden Mehrprozessorsystems, bei dem die einzelnen Mikroprozessoren jeweils mittels einer Zuteileinrichtung über einen mikroprozessorsysteminternen bzw. lokalen Bus, eine entsprechende Anpassungseinrichtung und über einen mit allen Mikroprozessorsystemen verbundenen Mehrprozessorbus, auf den ein Mikroprozessorsystem jeweils nur für die Dauer eines systemeigenen Buszugriffszyklus zugreifen kann, auf eine im gemeinsamen Speicher befindliche Datenbasis unter Berücksichtigung zugeteilter Prioritätskennzahlen zugreifen,
**dadurch gekennzeichnet,**
daß in jedem Mikroprozessorsystem an einen durch Steuer-, Adreß- und Datenleitungen gebildeten lokalen Bus (LB) die Zuteileinrichtung (ZTE) angeschlossen ist, daß der lokale Bus (LB) in der Zuteileinrichtung (ZTE) auf eine die zyklischen, prioritätskennzahlentsprechenden Mehrprozessorzugriffe steuernde Prioritätszuteileinrichtung (ZPZ) und auf eine den Datenbasiszugriff steuernde Datenbasiszuteileinrichtung (DBZ) geführt wird, daß ein die Information zum Steuern der Prioritätszuteileinrichtung (ZPZ) liefernder Steuerausgang (St) der Datenbasiszuteileinrichtung (DBZ) mit einem Steuereingang (St) der Prioritätszuteileinrichtung (ZPZ) verbunden ist und daß eine die Dauer der Datenbasiszugriffe überwachende Überwachungseinrichtung (ZÜ) über eine eine Information über den Buszugriffsanfang übertragende Leitung (ÜL) bzw. eine eine Information über das Buszugriffsende übertragende Leitung (ÜL) mit der Datenbasiszuteileinrichtung (DBZ) verbunden ist.

## Claims

1. Method for controlling a common memory of a multiprocessor system comprising individual microprocessor systems, in which method the individual microprocessors in each case access a data base located in the common memory by means of an allocating device via a microprocessor-system-internal or local bus, a corresponding adapter and via a multiprocessor bus connected to all microprocessor systems, which can be accessed by a microprocessor system in each case only for the duration of a system-inherent bus access cycle, taking into consideration allocated priority codes, characterised in that one of the microprocessor systems is controlled as the main processor system (HP) and the remaining microprocessor systems are controlled as secondary processor systems (NP) in such a manner that the data base stored in the common memory (Sp) can only be updated by the main processor system (HP) but the data base information items can be read by all microprocessor systems, that the allocating device (ZTE) is provided in the main processor system (HP) and that all microprocessor systems transmit their bus access requests to the allocating device (ZTE) by means of corresponding information items in each case via request lines (A) provided for this purpose, that in the allocating device (ZTE), the multiprocessor bus (MPB) is cyclically allocated to each microprocessor system in an order predetermined by the priority codes and an information item representing the allocation is transmitted to each multiprocessor system via allocation lines (Z) provided in each case for this purpose, that before the main processor system (HP) accesses the base region (DBSp) for updating the data base, the main processor system (HP) transmits to each secondary processor system (NP) via the multiprocessor bus (MPB) a message (M1) by means of which the access of all secondary processor systems (NP) to the multiprocessor bus (MPB) or, respectively, the base region (DBSp) is prevented until the data base is updated by the main processor system (HP) or the current access has been ended by means of a monitoring device (ZÜ) provided for this purpose and the multiprocessor bus access has been allocated to another secondary processor system (NP) in accordance with the priority code, that before a secondary processor system (NP) accesses the base region (DBSp) for reading the data base information items, the respective secondary processor system (NP) transmits a message (M2) to the main processor system (HP) via the multiprocessor bus (MPB), as a result of which the access of the main processor system (HP) to the multiprocessor bus (MPB) or, respectively, the base region (DBSp) for updating the data base is prevented until all secondary processor systems (NP), which are before the accessing secondary processor system (NP) in accordance with the priority code, in each case end their access to the base region (DBSp) or the monitoring device (ZÜ) ends a current access and grants the main processor system (HP) access to the base region (DBSp).

2. Method according to Claim 1, characterised in that after the transmission of fault messages of one or more secondary processor systems (NP) to the main processor system (HP), the multiprocessor bus (MPB) is no longer allocated to the faulty secondary processor systems (NP) in the allocating device (ZTE) until the faulty secondary processor systems (NP) transmit a message indicating the fault-free state to the main processor system (HP).

3. Method according to Claim 1, characterised in that all microprocessor systems have the same configuration and the microprocessor systems can be set as main or secondary processor systems (HP NP).

4. Method according to Claim 1, characterised in that the priority codes stored in local memories of the microprocessor systems can be arbitrarily distributed to the microprocessor systems.

5. Circuit arrangement for controlling a common memory of a multiprocessor system consisting of individual microprocessor systems, in which method the individual microprocessor systems in each case access a data base located in the common memory by means of an allocating device via a microprocessor-system-internal or local bus, a corresponding adapter and via a multi-processor bus connected to all microprocessor systems, which can be accessed by a microprocessor system in each case only for the duration of a system-inherent bus access cycle, taking into consideration allocated priority codes, characterised in that in each microprocessor system, the allocating device (ZTE) is connected to a local bus (LB) formed by control, address and data lines, that the local bus (LB) is connected to a priority allocator (ZPZ) controlling the cyclic multiprocessor accesses corresponding to the priority code in the allocating device (ZTE) and to a data base allocator (DBZ) controlling the data base access, that a control output (St) of the data base allocator (DBZ) supplying the information for controlling the priority allocator (ZPZ) is connected to a control input (St) of the priority allocator (ZPZ) and that a monitoring device (ZÜ) monitoring the duration of the data base accesses is connected via a line (ÜL) transmitting an information item on the bus access start and, respectively, a line (ÜL) transmitting an information item on the bus access end, to the data base allocator (DBZ).

## Revendications

1. Procédé pour commander une mémoire commune d'un système à processeurs multiples, constitué par des systèmes à microprocesseurs individuels, et selon lequel les différents microprocesseurs accèdent à une base de données située dans la mémoire commune en tenant compte de nombres caractéristiques de priorité associées, respectivement au moyen d'un dispositif d'affectation par l'intermédiaire d'un bus interne au système à microprocesseur ou d'un bus local, d'un dispositif correspondant d'adaptation et par l'intermédiaire d'un bus des processeurs multiples, qui est raccordé à tous les systèmes à microprocesseurs et auquel un système à microprocesseur peut avoir accès respectivement uniquement pendant la durée d'un cycle d'accès au bus, propre au système, caractérisé par le fait que l'un des systèmes à microprocesseurs est commandé en tant que système à processeur principal (HP) et les autres systèmes à microprocesseurs sont commandés en tant que systèmes à processeurs secondaires (NP) de telle sorte que la base de données mémorisée dans la mémoire commune (Sp) ne peut être actualisée que par le système à processeur principal (HP), tandis que les informations de la base de données sont lisibles par tous les systèmes à microprocesseurs, que le dispositif d'affectation (ZTE) est prévu dans le système à processeur principal (HP) et que tous les systèmes à microprocesseurs retransmettent au dispositif d'affectation (ZTE) leurs demandes d'accès au bus au moyen d'informations correspondantes, respectivement par l'intermédiaire de lignes de demande (A) prévues à cet effet, que dans le dispositif d'affectation (ZTE), le bus (MPB) des processeurs multiples est affecté cycliquement à chaque système à microprocesseur, selon une séquence prédéterminée par les numéros caractéristiques de priorité, et qu'une information représentant l'affectation est transmise à chaque système à plusieurs processeurs par l'intermédiaire de lignes d'affectation (Z) prévues respectivement à cet effet, qu'avant l'accès du système à processeur principal (HP) à la zone de base (DBSp) dans le sens de l'actualisation de la base de données, le système à processeur principal (HP) retransmet une signalisation (M1) à chaque système à processeur secondaire (NP) par l'intermédiaire du bus (MPB) des processeurs multiples, ce qui interdit l'accès de tous les systèmes à processeurs secondaires (NP) au bus (MPB) des processeurs multiples ou à la zone de base (DBSp) tant que l'actualisation de la base de données s'effectue au moyen du système à processeur principal (HP) ou que l'accès réel est interrompu au moyen d'un dispositif de contrôle (ZÜ) prévu à cet effet et que l'accès aux processeurs multiples est affecté à un autre système à processeur secondaire (NP), en fonction du numéro caractéristique de priorité, qu'avant l'accès d'un système à processeur secondaire (NP) à la zone de base (DBSb), le système respectif à processeur secondaire (NP) retransmet, dans le sens de la lecture des informations de la base de données, une signalisation (M2) au système à processeur principal (HP) par l'intermédiaire du bus (MPB) des processeurs multiples, ce qui interdit l'accès du système à processeur principal (HP) au bus (MPB) des processeurs multiples ou à la zone de base (DBSp), dans le sens de l'actualisation de la base de données, tant que tous les systèmes à processeurs secondaires (NP), qui, en fonction des numéros caractéristiques de priorité, sont situés avant le système à processeur secondaire (NP), qui demande l'accès, interrompent respectivement leur accès à la zone de base (DBSp) ou le dispositif de contrôle (ZÜ) interrompt un accès actuel et garantit au système à processeur principal (HP) l'accès à la zone de base (DBSp).

2. Procédé suivant la revendication 1, caractérisé par le fait qu'après la retransmission de signalisation de perturbations d'un ou de plusieurs systèmes à processeurs secondaires (NP) au système au processeur principal (HP) dans le dispositif d'affectation (ZTE), le bus (MPB) des multiprocesseurs n'est plus affecté aux systèmes à processeurs secondaires perturbés (NP) jusqu'à ce que les systèmes à processeurs secondaires perturbés (NP) retransmettent aux systèmes à processeurs principal (HP) une signalisation indiquant l'état exempt de perturbations.

3. Procédé suivant la revendication 1, caractérisé par le fait que tous les systèmes à microprocesseurs possèdent une même constitution et que les systèmes à microprocesseurs peuvent être réglés sous la forme de systèmes à processeur principal ou à processeur secondaire (HP, NP).

4. Procédé suivant la revendication 1, caractérisé par le fait que les numéros caractéristiques de priorité mémorisés dans des mémoires locales des systèmes à microprocesseurs peuvent être répartis à volonté entre les systèmes à microprocesseurs.

5. Montage pour la commande d'une mémoire commumne d'un système à processeurs multiples, constitué par des systèmes à microprocesseurs individuels, et selon lequel les différents microprocesseurs accèdent à une base de données située dans la mémoire commune en tenant compte de nombres caractéristiques de priorité associées, respectivement au moyen d'un dispositif d'affectation par l'intermédiaire d'un bus interne au système à microprocesseur ou d'un bus local, d'un dispositif correspondant d'adaptation et par l'intermédiaire d'un bus des processeurs multiples, qui est raccordé à tous les systèmes à microprocesseurs et auquel un système à microprocesseur peut avoir accès respectivement uniquement pendant la durée d'un cycle d'accès au bus, propre au système,
caractérisé par le fait que dans chaque système à microprocesseur, le dispositif d'affectation (ZTE) est raccordé à un bus local (LB) formé par des lignes de commande, de transmission d'adresses et de transmission de données, que le bus local (LB) est raccordé, dans le dispositif d'affectation (ZTE), à un dispositif (ZPZ) d'affectation de priorités, qui commande les accès cycliques aux processeurs multiples, en fonction des numéros caractéristiques de priorité, et à un dispositif (DBZ) d'affectation de la base de données, qui commande l'accès à la base de données, qu'une sortie de commande (St), qui délivre l'information pour la commande du dispositif (ZPZ) d'affectation de priorité, du dispositif (DBZ) d'affectation de la base de données est raccordée une entrée de commande (St) du dispositif (ZPZ) d'affectation de priorité, et qu'un dispositif de contrôle (ZÜ), qui contrôle la durée des accès à la base de données, est raccordé, par l'intermédiaire d'une ligne (ÜL), qui transmet une information concernant le début de l'accès au bus, ou d'une ligne (ÜL) qui transmet une information concernant la fin d'accès au bus, au dispositif d'affectation de la base de données.
